# EUROPÄISCHE PATENTSCHRIFT

(11) **EP 0 834 429 B1**
(45) Veröffentlichungstag und Bekanntmachung des Hinweises auf die Patenterteilung: **05.04.2000**
(21) Anmeldenummer: 97120390.6
(22) Anmeldetag: 09.06.1995
(51) Int. Cl.: B60R 21/20

(54) **Airbag-Anordnung**
Air bag arrangement
Agencement de coussin gonflable

(30) Priorität: 19.07.1994 DE 4425495; 28.09.1994 DE 4434685
(43) Veröffentlichungstag der Anmeldung: 08.04.1998
(62) Teilanmeldung aus: 95108905.1
(73) Patentinhaber: TAKATA (EUROPE) VEHICLE SAFETY TECHNOLOGY GmbH, D-89081 Ulm (DE)
(72) Erfinder: Herrmann, Gert B., 42699 Solingen (DE); Heudorfer, Benedikt, 89278 Nersingen/Leibi (DE); Klingauf, Gerhard, 88481 Balzheim (DE); Lung, Thomas, 89075 Ulm (DE); Ritter, Martin, 89233 Neu-Ulm (DE); Nann, Alexander, 73527 Schwäbisch Gmünd (DE); Schuster-Woldan, Andreas, 82166 Gräfelfing (DE)
(74) Vertreter: Manitz, Gerhart, Dr.

(56) Entgegenhaltungen:
- EP-A- 0 655 368
- DE-A- 3 811 373
- DE-A- 4 414 743
- GB-A- 2 268 452
- GB-A- 2 270 882
- GB-A- 2 273 471
- PATENT ABSTRACTS OF JAPAN vol. 016, no. 471 (M-1318), 30.September 1992 & JP 04 169356 A (NIPPON PLAST CO LTD), 17.Juni 1992,

## Beschreibung

Die Erfindung betrifft eine Airbag-Anordnung nach dem Oberbegriff des Patentanspruchs 1.

Im Falle von unfallbedingten Beschleunigungen des Fahrzeuges, in dem die Airbag-Anordnung eingebaut ist, zündet eine pyrotechnische Ladung im Gasgenerator und bringt aus vorzugsweise dort radial vorgesehenen Bohrungen austretende Heißgase zum Einströmen in den zusammengefalteten Gassack, welcher sich daraufhin unter Aufbrechen der Abdeckung aufbläht und den Fahrzeuginsassen vor einem zu harten Aufprall schützt.

Bei bekannten Airbag-Anordnungen (EP 0 376 564 A1, DE 42 05 726 A1) besteht das Problem, daß eine relativ große Anzahl von Einzelteilen erforderlich ist und die Montage einen so großen Aufwand erfordert, daß eine wirtschaftliche Herstellung insbesondere in Massenfertigung nicht möglich ist. Weiter muß der Gassack an der Öffnung mit einem Wulst versehen sein. Das ist auch bei einem Gassack nach der DE 90 14 749 U der Fall.

Bei einer bekannten Airbag-Anordnung der eingangs genannten Gattung (FR-A-2625960) wird der um die Öffnung herum befindliche Rand des Gassackes um den Abdeckungs-Randbereich herumgeschlagen, zwischen flächigen Bauteilen eingespannt und durch Bolzen, Nieten oder Klebstoff befestigt. In ähnlicher Weise wird nach der gattungsgemäßen JP-A-4169356 der um den Abdeckungs-Randbereich herumgeschlagene Rand des Gassackes durch über den Umfang verteilt angeordnete Nieten festgespannt.

Das Ziel der vorliegenden Erfindung besteht darin, eine Airbag-Anordnung der eingangs genannten Gattung zu schaffen, welche aus möglichst wenig Einzelteilen besteht und in besonders wirtschaftlicher Weise herstellbar und montierbar ist.

Zur Lösung dieser Aufgabe sind die Merkmale des kennzeichnenden Teils des Patentanspruchs 1 vorgesehen.

Durch die Verwendung eines axial auf den Abdeckungs-Randbereich aufgesetzten Klemmkanals und einer Schmelzverbindung wird unter Vermeidung von separaten Nieten, Schrauben oder Klebstoff im Abdeckungs-Randbereich eine besonders feste und sichere Verbindung der einzelnen Bestandteile erzielt, wobei die Herstellung und Montage in besonders wirtschaftlicher Weise möglich sind.

Eine weitere Verbesserung der Verbindung wird durch die Merkmale des Anspruches 2 erzielt.

Die Ausbildung nach Anspruch 3 hat den Vorteil, daß durch eine geeignete Dimensionierung der Rahmenbreite der Abstand der Heißgas-Austrittsbohrung des Gasgenerators von dem radial gegenüberliegenden Öffnungs-Randbereich so gewählt werden kann, daß bei Auslösung des Gasgenerators die ausströmenden Heißgase den Gassack im Öffnungs-Randbereich nicht schädigen können.

Das Vorsehen einer Stufe im Rahmenteil nach Anspruch 4 ist deswegen vorteilhaft, weil hierdurch die Heißgasstrahlen aus dem Gasgenerator in erster Linie auf die insbesondere etwas schräg verlaufende Stufe auftreffen und aufgrund geeigneter Schrägstellung von dieser in Richtung auf den Gassack axial umgelenkt werden, so daß lediglich sich schnell aufblähende und damit relativ schnell vom heißen Gasstrom entfernte Bereiche des Gassackes vom Heißgas beaufschlagt werden.

Die Erfindung wird im folgenden beispielsweise anhand der Zeichnung beschrieben; in dieser zeigt:
- Figur 1: einen Querschnitt durch eine Airbag-Anordnung zur Veranschaulichung des grundsätzlichen Aufbaus, wobei links von der Mittelachse 29 eine etwas andere Ausführungsform eingezeichnet ist als rechts davon und die Gesamtanordnung rotationssymmetrisch zur Mittelachse 29 ist,
- Figur 2: eine entsprechende Schnittansicht einer ersten Ausführungsform einer Airbag-Anordnung gemäß der Erfindung,
- Figur 3: einen entsprechenden schematischen Schnitt einer anderen Ausführungsform gemäß der Erfindung,
- Figur 4: einen nur links von der Mittelachse 29 wiedergegebenen entsprechenden schematischen Schnitt einer eine Schmelzverbindung aufweisenden Ausführungsform gemäß der Erfindung,
- Figur 5: eine perspektivische Teilansicht eines für die Herstellung der Schmelzverbindung nach Figur 4 verwendbaren Generatorträgers gemäß der Erfindung und
- Figur 6: einen Ausschnitt aus dem rechts der Mittelachse 29 von Figur 4 befindlichen Bereich während der Herstellung der Schmelzverbindung mittels eines Werkzeuges gemäß der Erfindung.

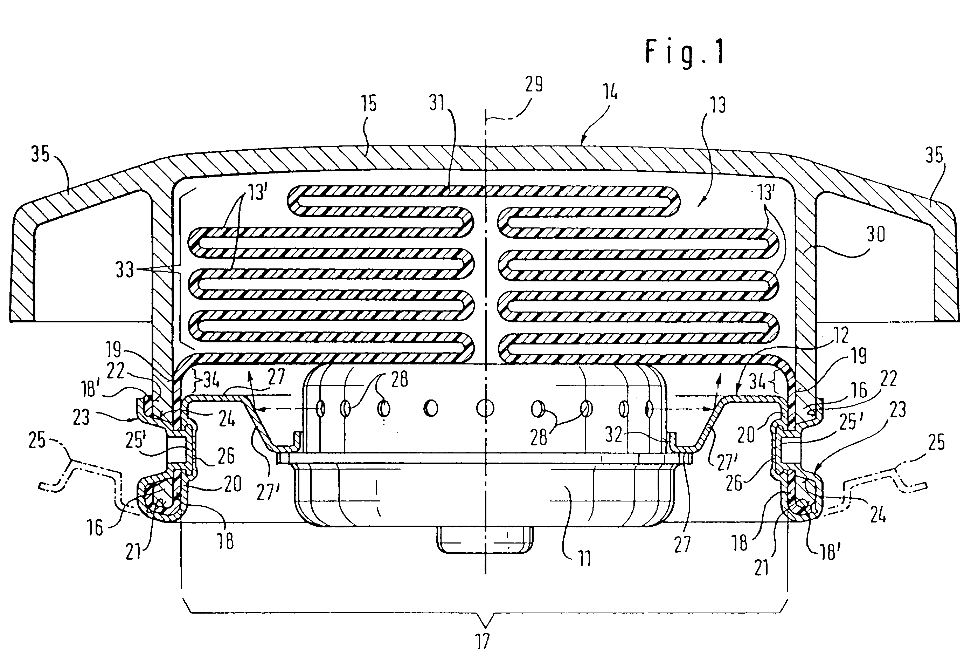

Gemäß Figur 1 ist in der topfförmigen Abdeckung 14 mit einem flachen Boden 15 und einer im wesentlichen kreiszylindrischen Wand 30 mit der Mittelachse 29 als Zylinderachse ein zusammengefalteter Gassack 13 vorgesehen, dessen geschlossenes Ende 31 sich unmittelbar gegenüber dem Boden 15 befindet, während eine am gegenüberliegenden Ende vorgesehene Öffnung 17 einen Generatorträger 12 aufnimmt, der seinerseits radial innen eine Aufnahmeöffnung 32 für einen dort eingesetzten und befestigten Gasgenerator 11 aufweist. Der Gasgenerator 11 ist kreiszylindrisch und rotationssymmetrisch zur Mittelachse 29 angeordnet und weist oberhalb der Verbindungsstelle zum Generatorträger 12 über den Umfang verteilt Gasaustrittsöffnungen 28 auf, aus denen im Falle einer Auslösung radial heiße Gasstrahlen austreten.

Wesentlich ist, daß sich an den in senkrecht zur Mittelachse 29 verlaufende Falten 13' gelegten Bereich 33 des Gassackes 13 in Richtung vom Boden 15 weg ein kreiszylindrischer Öffnungs-Randbereich oder Kragen 18 mit der Mittelachse 29 als Zylinderachse anschließt, der an der Innenwand 19 des vom Boden 15 abgewandten Abdeckungs-Randbereichs 16 der Wand 30 anliegt.

Gemäß der Erfindung besteht der Generatorträger 12 aus einem den Gasgenerator 11 umschließenden Rahmenteil 27, der bei der dargestellten kreissymmetrischen Ausbildung zur Mittelachse 29 einen Rahmenring darstellt, und einem radial äußeren, in vom Boden 15 abgewandter Richtung abgebogenen Wandteil 20, welcher beim dargestellten Ausführungsbeispiel im wesentlichen die Form eines Kreiszylinders hat. Der Durchmesser des Wandteils 20 ist so gewählt, daß seine Außenwand an der Innenseite des Öffnungs-Randbereiches 18 anliegt. Dies entspricht einer bevorzugten Anordnung, in welcher die Erzeugenden des Öffnungs-Randbereiches 18 bzw. des Wandteils 20 parallel zueinander verlaufen. Eine weitere bevorzugte Anordnung ergibt sich, wenn die Erzeugenden in Richtung auf den Boden 15 der Abdeckung 14 etwas aufeinander zu laufen.

Der Öffnungs-Randbereich 18 des Gassackes 13 erstreckt sich bis zur vom Boden 15 abgewandten Stirnkante 21 des Abdeckungs-Randbereiches 16 und ist dort um die Stirnkante 21 nach außen herumgeschlagen. Bei dem Ausführungsbeispiel, das rechts von der Mittelachse 29 in Figur 1 dargestellt ist, befindet sich der herumgeschlagene Randbereich 18' praktisch nur im Bereich der Stirnkante 21, während bei dem links von der Mittelachse 29 wiedergegebenen Ausführungsbeispiel der herumgeschlagene Randbereich 18' sich über einen erheblichen Teil der Außenwand 22 des Abdeckungs-Randbereiches 16 wieder in Richtung zum Boden 15 erstreckt.

Der Wandteil 20 des Generatorträgers 12 weist über den Umfang verteilt an seinem vom Boden 15 abgewandten Ende eine Reihe von Biegeklammern 23 auf, die vorzugsweise einstückig mit ihm ausgebildet sind. Die Biegeklammern 23 besitzen in einem Abstand von der Stirnkante 21 Befestigungsmittel in Form von nach dem Durchsetzfügeverfahren verformbaren flachen Bereichen 25.

In Figur 1 sind die Biegeklammern 23 und die Befestigungsbereiche 25 sowohl in der Ausgangsposition vor dem Herumbiegen als auch in der fertig montierten Position dargestellt, wo durch nietenartiges Herausformen der Bereiche 25 und Zusammenfließen mit dem bei 26 komplementär verformten Wandteil 20 ein Durchsetzfüge-Kraftspanner 25' erzeugt ist.

Im Bereich jeder Befestigungsklammer 23 befindet sich in dem Abdekkungs-Randbereich 16 eine radiale Befestigungsbohrung 24, deren Durchmesser an den Durchmesser des Kraftspanners 25' angepaßt ist.

Die Herstellung und Montage der beschriebenen Airbag-Anordnung geht wie folgt vor sich:

Der Gassack 13 wird aus einem zusammengefalteten Teil 33 und einem Öffnungs-Randbereich bzw. Kragen 18 hergestellt und kann gegebenenfalls vorgefertigt angeliefert werden.

Die weiteren Teile der Anordnung, nämlich der Generator 11, der Generatorträger 12 und die Abdeckung 14 können gesondert angefertigt werden, wobei zunächst die Abdeckung 14 und der mit dem Generatorträger 12 zusammengebaute Generator 11 gesonderte Bauelemente darstellen.

Anschließend wird dann zunächst der Gassack 13 in zusammengefalteter Form in den Innenraum der Abdeckung 14 in der aus Figur 1 ersichtlichen Weise eingebracht, wobei der Öffnungs-Randbereich 18 um die Stirnkante 21 herumgeschlagen wird und dabei zur Anlage an der Innenwand 19 und beim Ausführungsbeispiel links von der Mittelachse 29 auch an der Außenwand 22 des Abdeckungs-Randbereiches 16 kommt.

Nunmehr wird von der vom Boden 15 und Gassack 13 abgewandten Seite her axial der bereits mit dem Gasgenerator 11 zusammengebaute oder mit ihm ein Stück bildende Generatorträger 12 eingeschoben, wobei der Wandteil 20 an der Innenwand des Öffnungs-Randbereiches des Gassakkes 13 entlanggleitet, bis die aus Figur 1 ersichtliche Position erreicht ist.

Jetzt werden die Biegeklammern 23 mittels eines nicht dargestellten geeigneten Werkzeuges links von der Mittelachse 29 in Uhrzeigersinn und rechts von der Mittelachse 29 entgegen dem Uhrzeigersinn um die Stirnkante 21 herumgebogen, wobei die Bereiche 25 ausgeformt und durch die Befestigungsbohrungen 24 hindurchgetrieben werden, den Öffnungs-Randbereich 18 durchbohren und mit dem Wandteil 20 durch Bildung der komplementären Vertiefungen 26 vernietet werden. Für diesen Vorgang kann ein sämtliche Biegungen und Fügevorgänge zugleich vornehmendes geeignetes Werkzeug vorgesehen sein.

Nach Verbindung der verformten Bereiche 25' mit dem Wandteil 20 durch Ausbildung hinterschnittener Vertiefungen 26 ist der Öffnungs-Randbereich 18 mit dem Wandteil 20 und dem Abdeckungs-Randbereich 16 druckdicht verspannt, so daß beim Zünden des Gasgenerators 11 und dem anschließenden Aufblähen des Gassackes 13 unter Aufbrechen des Bodens 15 der Abdeckung 14 ein sicherer Halt des Gassackes 13 im Bereich seiner Öffnung 17 gewährleistet ist.

Von besonderer Bedeutung ist die Stufe 27' im Rahmenring 27, welche beim Ausführungsbeispiel nach Figur 1 als sich zum Boden 15 hin konisch erweiternde Ringstufe ausgebildet ist und radial gegenüber den Gasaustrittsbohrungen 28 liegt. Auf diese Weise gelangen die aus den Gasaustrittsbohrungen 28 im Sinne der gestrichelten Pfeile in Figur 1 verlaufenden Heißgase zunächst auf die Ringstufe 27', wo sie im wesentlichen in Richtung auf den Boden 15 umgelenkt werden und dadurch den Gassack 13 aufblähen. Auf diese Weise werden die heißen Gase weitgehend von dem radial nach innen freiliegenden und im wesentlichen stationären Bereich 34 des Gassackes 13 ferngehalten.

Aufgrund der Ausbildung gemäß der Erfindung kann der Generatorträger 12 in weitgehend beliebiger Form ausgestaltet werden, sofern er nur die sich aus Figur 1 ergebende grundsätzliche Rahmenform aufweist. Es kann auch mehr als ein Generator 11 an einem Generatorträger 12 befestigt sein.

Rund um den Boden 15 der topfförmigen Abdeckung 14 kann noch ein im wesentlichen ringförmiger Abdeckbereich 35 vorgesehen sein, der die dahinterliegenden Bauelemente verdeckt.

In den folgenden Figuren bezeichnen gleiche Bezugszahlen entsprechende Bauelemente wie in Figur 1.

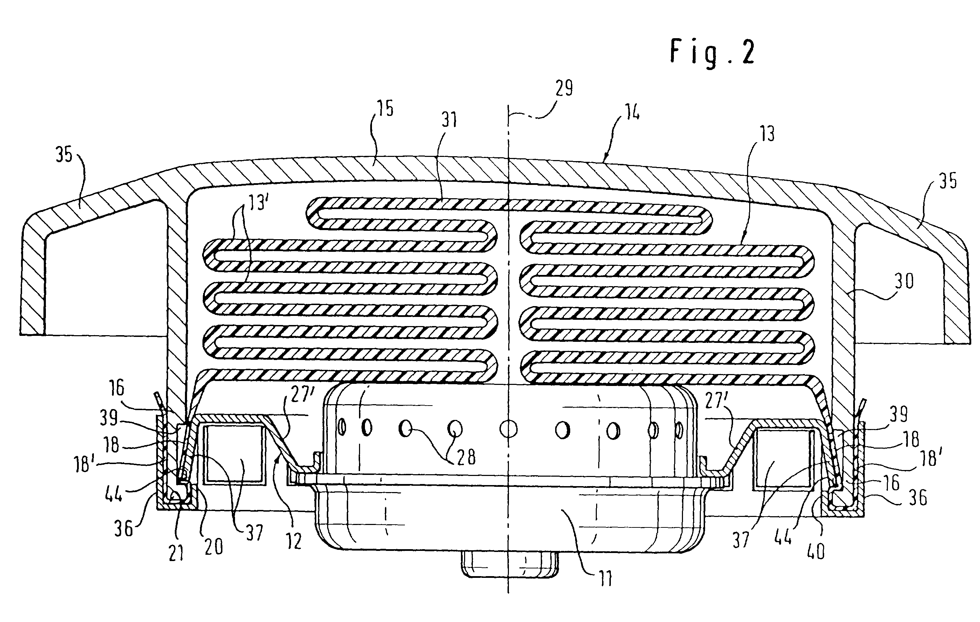

Bei dem Ausführungsbeispiel nach Figur 2 schließt sich an das Wandteil 20 des Generatorträgers 12 nach außen ein rundum die Achse 29 laufender Klemmkanal 36 mit im wesentlichen U-förmigen Querschnitt an, der in Richtung auf den Boden 15 der Abdeckung 14 offen ist. Aus dem zum Klemmkanal 36 gehörenden Wandteil 20 sind in bestimmten Abständen in Umfangsrichtung Schnapphaken 37 nach außen herausgestanzt und - gebogen, welche in dazu komplementäre Schnappvertiefungen 39 auf der Innenseite des Abdeckungs-Randbereiches 16 eingreifen, und zwar derart, daß die freie Stirnkante 44 der Schnapphaken 37 widerhakenartig in die Schnappvertiefung eingreift und so ein Herausziehen des Generatorträgers 12 aus der Position von Figur 2 nach unten verhindert.

Zwischen den Schnapphaken 37 und den Schnappvertiefungen 39 erstreckt sich der Öffnungs-Randbereich 18 des Gassackes 13 ebenso wie zwischen dem Wandteil 20 und dem Abdeckungs-Randbereich 16. An der freien Stirnkante 44 der Schnapphaken 37 wird der Gassack 13 beim Aufblähen besonders wirksam festgehalten.

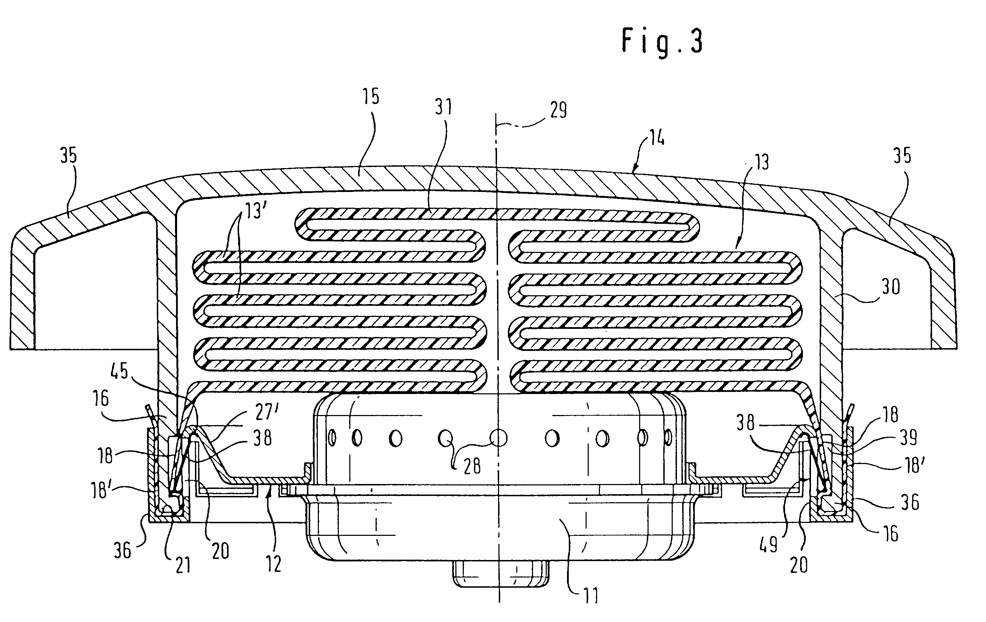

Bei der Ausführungsform nach Figur 3 weist das Wandteil 20 an den Stellen, wo bei der Ausführungsform nach Figur 2 die Schnapphaken 37 vorgesehen sind, ausgestanzte Durchbrechungen 49 auf, in welche Schnappfedern 38 eingesetzt sind, die sich zwischen einer Lagernut 45 des Generatorträgers 12 und der in Figur 3 unteren Berandung der Schnappvertiefung 39 erstreckt und analog den Schnapphaken 37 nach Figur 2 ein Herausziehen des Generatorträgers 12 aus dem ihn umgebenden Abdeckungs-Randbereich 16 nach unten in Figur 3 verhindert.

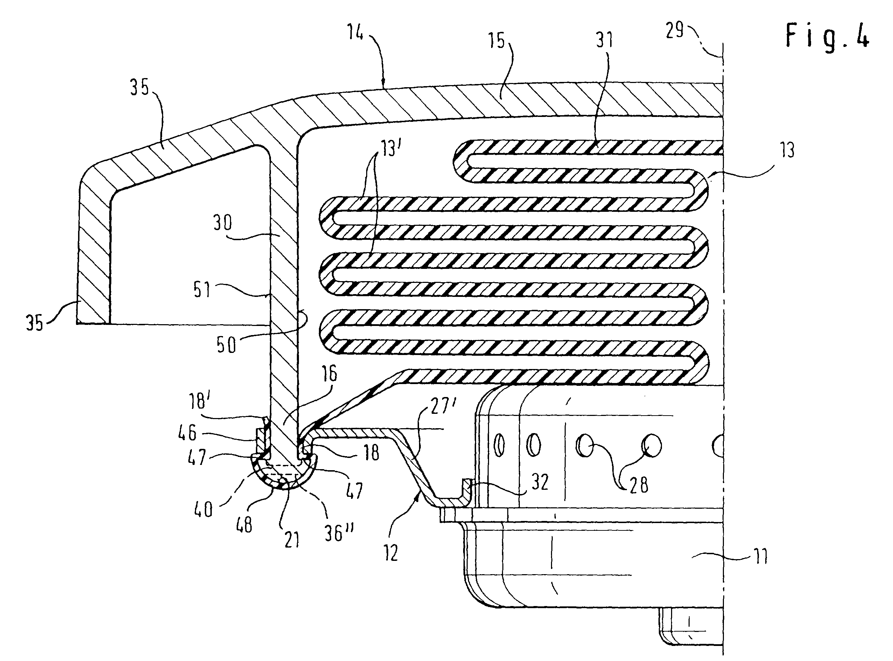

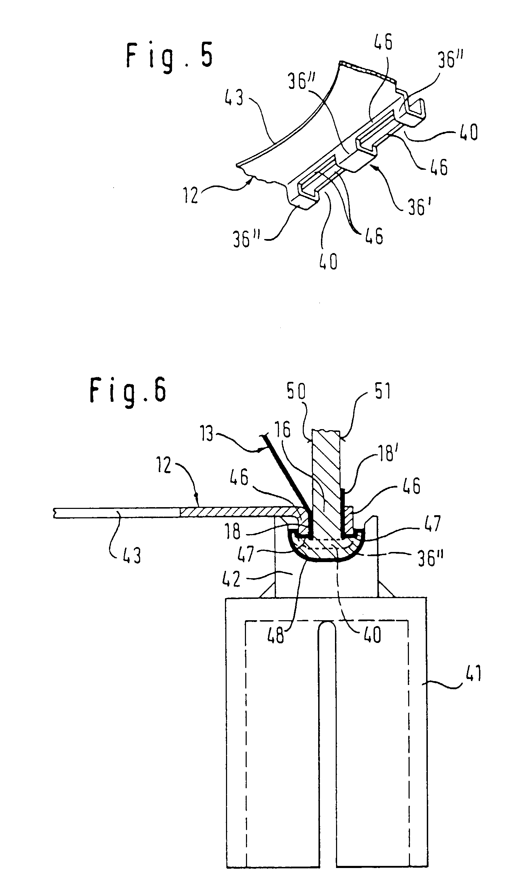

Figur 5 zeigt in einer perspektivischen Teilansicht einen Generatorträger 12, wie er beim Ausführungsbeispiel nach den Figuren 4 und 6 verwendet wird. Der Klemmkanal 36' ist hier in Abständen durch Durchbrechungen 40 unterbrochen, wobei jedoch die einzelnen verbleibenden U-förmigen Bereiche 36" noch durch schmale Stege 46 verbunden bleiben.

Wird ein derartiger Klemmkanal 36' gemäß Figur 6 unter Zwischenklemmung der Randbereiche 18, 18' des Gassackes 13 auf das vom Boden 15 abgewandte Ende des Randbereiches 16 aufgesetzt und diese Anordnung durch die entsprechend geformte Matrize 42 eines heizbaren Werkzeuges 41 aufgeheizt, so schmilzt das thermoplastische Material des Abdeckungs-Randbereiches 16 im Bereich des Klemmkanals 36' derart auf, daß es unter Aufblähung der den Randbereich 16 umgebenden Teile des Randbereiches 18 des Gassackes 13 in die Durchbrechungen 40 fließt und den von der Matrize 42 vorgegebenen Raum weitgehend ausfüllt.

Die Formöffnung der Matrize 42 erstreckt sich seitlich bis über die Innen- und Außenwände 50, 51 des Abdeckungs-Randbereiches hinaus, wodurch der eingespannte Randbereich 18, 18' des Gassackes 13 im Bereich der Durchbrechungen 40 nach jeder Seite eine Stufe 47 bildet, wobei sich zwischen den Stufen 47 ein im Querschnitt etwa halbkreisförmiger Wölbebereich 48 erstreckt. Da die Stufen 47 sich im Bereich der Durchbrechungen 40 seitlich über die schmalen Stege 46 erstrecken, ist in diesem Bereich ein besonders guter Halt des Gassackes 13 beim Aufblähen gewährleistet.

## Patentansprüche

1. Airbag-Anordnung bei Kraftfahrzeugen mit
- wenigstens einem Gasgenerator (11),
- einem Generatorträger (12),
- einem zusammengefalteten Gassack (13) mit wenigstens einer den Gasgenerator (11) aufnehmenden Öffnung (17) und
- einer den zusammengefalteten Gassack (13) aufnehmenden, topfartigen Abdeckung (14), deren Boden (15) vom mittels des Gasgenerators (11) expandierten Gassack (13) aufbrechbar ist und deren vom Boden (15) abgewandter Abdeckungs-Randbereich (16) mit dem Generatorträger (12) verbunden ist, wobei
- der wulst- und einlagenfreie Öffnungs-Randbereich (18) um die Öffnung (17) des Gassackes (13) mit dem Gasgeneratorträger (12) fest und druckdicht verbunden ist,
- der Öffnungs-Randbereich (18) des Gassackes (13) rundum zwischen zwei flächigen Bauteilen eingespannt ist und
- der Öffnungs-Randbereich (18) um die Stirnkante (21) des Abdeckungs-Randbereiches (16) herumgelegt sowie
- der herumgelegte Endbereich (18') an der Außenwand (22) des Abdeckungs-Randbereiches (16) gehalten ist,
dadurch **gekennzeichnet**,
daß rund um den Außenrand des Generatorträgers (12) ein zum Abdeckungs-Randbereich (16) komplementärer und zum Abdekkungs-Randbereich (16) hin offener Klemmkanal (36, 36') vorgesehen ist, der unter Zwischenschaltung des Randbereiches (18, 18') des Gassackes (13) axial auf den Abdeckungs-Randbereich (16) aufgesetzt ist und daß zwischen dem Abdeckungs-Randbereich (16), dem Randbereich (18, 18') des Gassackes (13) und dem Klemmkanal (36, 36') eine Schmelzverbindung vorgesehen ist.

2. Anordnung nach Anspruch 1,
dadurch **gekennzeichnet,**
daß der Klemmkanal (36) in Abständen in seiner Umfangsrichtung Durchbrechungen (40) aufweist, in die bei Herstellung der Schmelzverbindung das geschmolzene Material des Abdeckungs-Randbereiches (16) unter Aufspannung des um die Stirnkante (21) geschlagenen Randbereiches (18, 18') des Gassackes (13) hineingeflossen ist.

3. Anordnung nach Anspruch 1 oder 2,
dadurch **gekennzeichnet,**
daß der Generatorträger ein innen den Generator (11) aufnehmendes Rahmenteil (27) aufweist, an das außen das Wandteil (20) anschließt.

4. Anordnung nach Anspruch 3,
dadurch **gekennzeichnet,**
daß das Rahmenteil (27) eine Stufe (27') aufweist, die in Höhe der Gasaustrittsöffnungen (28) des Gasgenerators (11) liegt bzw. daß das Rahmenteil (27) in der Höhe der Gasaustrittsöffnungen abgeschrägt ist.

## Claims

1. Airbag arrangement for motor vehicles comprising
- at least one gas generator (11),
- a generator carrier (12),
- a folded up gas bag (13) having at least one opening (17) which receives the gas generator (11), and
- a pot-like cover (14) which receives the folded up gas bag (13) and the base (15) of which can be broken open by the gas bag (13) expanded by means of the gas generator (11) and of which the marginal region (16) of the cover remote from the base (15) is connected to the generator carrier (12), wherein s
- the marginal region (18) around the opening (17) of the gas bag (13), which is free of beads and inserts, is firmly connected to the gas generator carrier (12) in pressure-tight manner,
- the marginal region (18) of the opening of the gas bag (13) is clamped all around between two areal components,
- the marginal region (18) of the opening is laid around the end edge (21) of the marginal region (16) of the cover and also
- the laid around end region (18') is held at the outer wall (22) of the marginal region (16) of the cover, characterised in that a clamping channel (36, 36') which is open towards the marginal region (16) of the cover and complementary thereto is provided around the outer margin of the generator carrier (12) and is axially mounted onto the marginal region (16) of the cover, with the marginal region (18, 18') of the gas bag (13) being inserted therebetween, and in that a fused connection is provided between the marginal region (16) of the cover, the marginal region (18, 18') of the gas bag (13) and the clamping channel (36, 36').

2. Arrangement in accordance with claim 1, characterised in that the clamping channel (36) has apertures (40) at intervals in its circumferential direction into which the molten material of the marginal region (16) of the cover flows during manufacture of the fused connection while gripping the edge region (18, 18') of the gas bag (13) which has been turned around the end edge (21).

3. Arrangement in accordance with claim 1 or claim 2, characterised in that the generator carrier has a frame part (27) which receives the generator (11) at its inside and which is followed outwardly by the wall part (20).

4. Arrangement in accordance with claim 3, characterised in that the frame part (27) has a step (27') which lies at the level of the gas outlet openings (28) of the gas generator (11), or in that the frame part (27) is chamfered off at the level of the gas outlet openings.

## Revendications

1. Agencement de coussin gonflable dit "airbag" dans des véhicules automobiles, comprenant :
- au moins un générateur de gaz (11),
- un support de générateur (12),
- un sac à gaz (13) replié présentant au moins une ouverture (17) qui reçoit le générateur de gaz (11), et
- un couvercle (14) en forme de pot qui reçoit le sac à gaz replié (13), dont le fond (15) est susceptible d'être rompu par le sac à gaz (13) qui se dilate au moyen du générateur de gaz (11), et dont la partie de bordure (16) détournée du fond (15) est reliée au support de générateur (12),
dans lequel :
- la zone de bordure (18) autour de l'ouverture (17) du sac à gaz (13) est dépourvue de bourrelets et d'inserts, et est reliée fermement et de manière étanche à la pression avec le support de générateur (12),
- la zone de bordure (18) du sac à gaz (13) est serrée sur tout le pourtour entre deux composants plans,
- la zone de bordure (18) est repliée autour de l'arête frontale (21) de la partie de bordure (16) du couvercle, et
- la zone terminale repliée (18') est tenue contre la paroi extérieure (22) de la partie de bordure (16) du couvercle,
caractérisé en ce que
il est prévu tout autour de la bordure extérieure du support de générateur (12) un canal de serrage (36, 36') complémentaire de la partie de bordure (16) du couvercle et ouvert en direction de ladite partie de bordure (16) du couvercle, ledit canal de serrage étant posé axialement sur la partie de bordure (16) du couvercle avec interposition de la zone de bordure (18, 18') du sac à gaz (13), et
il est prévu une jonction par fusion entre la partie de bordure (16) du couvercle, la zone de bordure (18, 18') du sac à gaz (13) et le canal de serrage (36, 36').

2. Agencement selon la revendication 1,
caractérisé en ce que le canal de serrage (36) présente des traversées (40) écartées dans sa direction périphérique, dans lesquelles lors de l'établissement de la jonction par fusion s'écoule le matériau en fusion de la partie de bordure (16) du couvercle, en serrant la zone de bordure (18, 18') du sac à gaz (13) repliée autour de l'arête frontale (21).

3. Agencement selon l'une ou l'autre des revendications 1 et 2,
caractérisé en ce que le support de générateur comprend une partie de cadre (27) qui reçoit à l'intérieur le générateur (11), et à laquelle se raccorde la partie de paroi (20) à l'extérieur.

4. Agencement selon la revendication 3,
caractérisé en ce que la partie de cadre (27) présente un gradin (27'), situé à la hauteur des ouvertures de sortie de gaz (28) du générateur de gaz (11), ou bien en ce que la partie de cadre (27) est biseautée à la hauteur des ouvertures de sortie de gaz.
